# EUROPÄISCHE PATENTSCHRIFT

(11) **EP 3 572 247 B1**
(45) Veröffentlichungstag und Bekanntmachung des Hinweises auf die Patenterteilung: **23.06.2021**
(21) Anmeldenummer: 19168559.3
(22) Anmeldetag: 11.04.2019
(51) Int. Cl.: B60C 19/00, B60C 23/04

(54) **FAHRZEUGREIFEN**
VEHICLE TYRE
PNEU DE VÉHICULE

(30) Priorität: 25.05.2018 DE 102018208246
(43) Veröffentlichungstag der Anmeldung: 27.11.2019
(73) Patentinhaber: Continental Reifen Deutschland GmbH, 30165 Hannover (DE)
(72) Erfinder: Zebian, Makram, 30165 Hannover (DE); Schürmann, Oliver, 30165 Hannover (DE)
(74) Vertreter: Continental Corporation

(56) Entgegenhaltungen:
- DE-A1-102011 003 712
- DE-A1-102015 213 157
- US-A1- 2007 146 124
- US-A1- 2014 246 133

## Beschreibung

Die Erfindung betrifft einen Fahrzeugreifen mit einer Lauffläche, Seitenwänden und einer Reifeninnenseite, wobei Schaumstoff an der Reifeninnenseite angeordnet ist, wobei eine zur Dämpfung von Schallwellen ausgebildete Membran mit dem Schaumstoff verbunden ist, wobei ein Elektronikmodul an der Reifeninnenseite angeordnet ist, und wobei die Membran mit dem Elektronikmodul gekoppelt ist.

Fahrzeugreifen sind aus dem Stand der Technik bekannt. Ein Fahrzeugreifen wird auch als Kraftfahrzeugreifen, Reifen, Luftreifen oder Fahrzeugluftreifen bezeichnet.

Ein Fahrzeugreifen eingangs genannter Art ist beispielsweise aus der DE 10 2015 213 157 A1 bekannt. Dieser Fahrzeugreifen weist ein im Reifenhohlraum angeordnetes Reifenmodul mit einem Gehäuse und einem Elektronikmodul auf, wobei das Reifenmodul mit einem im Reifenhohlraum angeordneten Schallabsorber und einem Energieerzeuger in Verbindung steht. Der Schallabsorber ist mit seiner Unterseite an der Reifeninnenseite befestigt. Der Energieerzeuger ist eine Piezofolie, welche auf der Oberseite des Schallabsorbers angeklebt ist, wobei das Reifenmodul auf der Oberseite der Piezofolie mit einem Klebemittel montiert ist.

Aus der DE 10 2007 028 932 A1 ist ein Fahrzeugreifen bekannt, bei dem ein Schaumstoffring an der Reifeninnenseite angebracht ist. Der Schaumstoffring dient zur Schallabsorption.

Bei einem auf einer Fahrbahn abrollenden Fahrzeugreifen entstehen oftmals Schallwellen, die als Geräusche wahrgenommen werden. Die Schallwellen können durch Vibration der Luft im von dem Reifen und einer Felge eingeschlossenen Radinnenraum verursacht sein. Bei einem Fahrzeugreifen für einen Personenkraftwagen entstehen so oftmals Schallwellen mit einer Frequenz zwischen 170 Hertz und 270 Hertz. Dieser Frequenzbereich ist oftmals auf die Geometrie des Fahrzeugreifens zurückzuführen. Insbesondere kann hierbei der Umfang des Fahrzeugreifens Einfluss haben. Denn die Schallwellen können in dem geschlossenen Radinnenraum verlaufende Raummoden bilden, die zu der von dem Fahrzeugreifen bestimmten Resonanzfrequenz korrespondieren. Eine übliche Resonanzfrequenz liegt also innerhalb des zuvor genannten Frequenzbereiches oder bei einem Vielfachen davon. Die durch die Schallwellen verursachten Geräusche können im Fahrgastraum eines Fahrzeugs wahrgenommen werden.

Aus dem Stand der Technik sind Fahrzeugreifen mit einem Sensor bekannt. So kann ein Fahrzeugreifen beispielsweise einen Drucksensor aufweisen, der an der Reifeninnenseite stoffflüssig befestigt ist.

Der Erfindung liegt die Aufgabe zugrunde, einen Fahrzeugreifen bereitzustellen, der sowohl eine Elektronikfunktionalität als auch ein möglichst niedriges Geräuschniveau beim Abrollen auf einer Fahrbahn gewährleistet.

Gelöst wird die Aufgabe durch einen Fahrzeugreifen mit den Merkmalen des kennzeichnenden Teiles des Anspruchs 1. Vorgesehen ist also ein Fahrzeugreifen, bei welchem zumindest eine Außenseite des Elektronikmoduls direkt an der Reifeninnenseite befestigt ist.

Bei dem Schaumstoff handelt es sich vorzugsweise um einen künstlich hergestellten Schaumstoff. Der Schaumstoff kann Kunststoff aufweisen oder daraus bestehen. Außerdem handelt es sich vorzugsweise um einen Kunststoff aus festem Material. Bei dem Kunststoff handelt es sich also vorzugsweise nicht um Schaum aus Flüssigkeit. Der Schaumstoff weist vorzugsweise eine zellige Struktur und/oder Poren auf. Bei dem Schaumstoff kann es sich also um ein poröses Material handeln. Es kann sich bei dem Schaumstoff um einen offenzelligen Schaumstoff oder um einen gemischtzelligen Schaumstoff oder um einen geschlossenzelligen Schaumstoff handeln. Der Schaumstoff kann beispielsweise ein thermoplastischer Schaumstoff, ein elastomerer Schaumstoff oder ein duoplastischer Schaumstoff sein.

Bei dem Schaumstoff kann es sich um ContiSilent®-Schaum, Polyurethan-Schaum und/oder Polyester-Schaum handeln. Der Schaumstoff kann eine Dichte von 20 kg/m³ bis 85 kg/m³ oder 100 kg/m³, eine Härte von 3,5 kilo-pascal bis 10 kilo-pascal und/oder eine Stauchhärte von 1,5 kilo-pascal aufweisen. Weitere mögliche poröse Materialien als Schaumstoff können beispielsweise eine Mischung aus Polyurethan und/oder Polyester und/oder Polyether, oder Polyurethanschäume auf einer Polyetherbasis oder einer Polyesterbasis aufweise, und/oder sie weisen eine beliebige, schallabsorbierende Materialienmischung, beispielsweise Glas- oder Steinwolle, Schlingenware oder Hochflor oder Vliesmaterialien oder Kork auf. Weitere mögliche poröse Materialien als Schaumstoff sind beispielsweise ein Melaminharzschaum oder ein Bauschaum.

Der Schaumstoff kann zur akustischen Dämpfung ausgebildet sein. Beispielsweise kann der Schaumstoff derart ausgebildet sein, dass sich wiederholende Frequenzen der in dem Fahrzeugreifen entstehenden Schallwellen von dem Schaumstoff gedämpft, insbesondere effektiv gedämpft, und/oder unterdrückt werden können. So kann der Schaumstoff beispielsweise dazu ausgebildet sein, Schallwellen mit einer vorbestimmten Frequenz besonders effektiv zu dämpfen und/oder sogar zu isolieren.

Der Schaumstoff kann segmentiert in Schaumstoffabschnitte unterteilt sein. Jeder Schaumstoffabschnitt kann ein akustisches Dämpfungselement bilden. Ist der Schaumstoff als durchgängiger Schaumstoff ausgebildet, so kann sich der Schaumstoff beispielsweise in Umfangsrichtung des Fahrzeugreifens, vorzugsweise umlaufend und/oder ringförmig in Umfangsrichtung des Fahrzeugreifens, erstrecken. Sofern der Schaumstoff als durchgängiger Schaumstoff ausgebildet ist, können die zuvor genannten Dämpfungselemente als integrale Dämpfungselemente des Schaumstoffs ausgebildet sein.

Der Schaumstoff ist vorzugsweise an einem Abschnitt an der Reifeninnenseite angeordnet. So ist es nicht zwingend notwendig, dass sich der Schaumstoff ringförmig über die gesamte Umlaufrichtung der Reifeninnenseite erstreckt. Jedoch ist es von Vorteil und auch bevorzugt, dass der Schaumstoff eine ringförmige Form hat, und umlaufend an der Reifeninnenseite angeordnet ist. Der Schaumstoff kann an der Reifeninnenseite stoffflüssig befestigt sein. Der Schaumstoff bzw. die zugehörigen Schaumstoffabschnitte können mittels eines Haftmittels an der Reifeninnenseite befestigt sein. Bei dem Haftmittel kann es sich um ein Dichtmittel und/oder ein Klebemittel handeln.

Bei dem Dichtmittel handelt es sich beispielsweise um ein Polyurethan-Gel oder um eine butylkautschukbasiertes Dichtmittel. Bevorzugt handelt es sich um ein butylkautschukbasiertes Dichtmittel in Kombination mit einem Klebemittel. Bei dem Klebemittel kann es sich um ein Klebeband und/oder einen silikonbasierten Kleber und/oder einen Zwei-Komponenten-Kleber und/oder einen Baukleber und/oder einen Polyurethan-Kleber und/oder einen kautschukbasierten Kleber und/oder einen Reifenreparaturkleber und/oder einen Sekundenkleber und/oder einen Kleber basierend auf Cyanacrylat und/oder basierend auf einem wasserbasierten Acryl-System mit einer Polyethylenterephthalat-Struktur und/oder basierend auf Acryl-Nitril-Butadien-Kautschuk in Verbindung mit einem in Aceton gelösten Formaldehyd-Harz und/oder basierend auf einem Silan-Polyether und/oder basierend auf einem mit Butyl-Kautschuk vernetzten Polybuten und/oder basierend auf einem Alkoxy-Silikon handeln.

Die Membran des Fahrzeugreifens ist zur Dämpfung von Schallwellen ausgebildet. So kann die Membran beispielsweise zur Dämpfung von Schallwellen mit einer Frequenz zwischen 170 Hz und 260 Hz ausgebildet sein. Vorzugsweise ist die Membran ausgebildet, von einer Schallwelle zu Schwingungen angeregt zu werden, so dass die Membran eine Dämpfung der Schallwelle verursacht. Die Membran kann beispielsweise ausgebildet sein als: eine Kunststofffolie, eine Metallfolie, insbesondere eine Aluminiumfolie, eine gewebeverstärkte Membran, eine Naturmaterialien aufweisende Membran, eine Kohlenstofffasern aufweisende Membran, eine Aramid oder Aramidfasern aufweisende Membran, eine Gummimembran, oder eine Moosgummimembran. Die Membran kann auch aus einer Kombination von mindestens zwei der zuvor genannten Ausgestaltungen ausgebildet sein.

Vorzugsweise ist die Membran nach Art eines Gewebes, eines Gitters und/oder eines Netzes ausgebildet. Dabei können die fadenförmigen Elemente aus Kunststoff oder Metall gebildet sein. So kann die Membran beispielsweise von einem Kunststoff-Gitter oder einem Metallgitter gebildet sein. Die Membran kann aber auch eine andere Form aufweise. So kann die Membran beispielsweise nach Art einer Antenne, insbesondere nach Art einer ringförmigen oder baumförmigen Antenne, ausgebildet sein.

Die Membran ist mit dem Schaumstoff verbunden. Sollte die Membran zu Schwingungen angeregt werden, insbesondere durch die in dem Fahrzeugreifen entstehenden Schallwellen, so kann die Verbindung zwischen der Membran und dem Schaumstoff dazu beitragen, dass die Schallwellen von dem Schaumstoff und der Membran gemeinsam gedämpft werden.

An der Reifeninnenseite des Fahrzeugreifens ist ein Elektronikmodul direkt angeordnet. Bei einer direkten Anordnung kann das Elektronikmodul beispielsweise direkt an der Reifeninnenseite stoffschlüssig befestigt sein.

Ein Elektronikmodul weist vorzugsweise elektronische Bauteile auf. So kann das Elektronikmodul beispielsweise einen Drucksensor zur Erfassung des Luftdrucks aufweisen. In der Praxis wurde festgestellt, dass für das Elektronikmodul weitere Funktionen vorgesehen sein können, wie beispielsweise eine Datenverarbeitungseinheit und eine Funkeinheit. Für die Datenverarbeitungseinheit kann eine Kühlrippe vorgesehen sein. Für die Funkeinheit kann eine Antenne vorgesehen sein. Bei einem steigenden Funktionsumfang des Elektronikmoduls steigt auch das Gewicht des Elektronikmoduls. Ist ein derartiges Elektronikmodul nun an der Reifeninnenseite des Fahrzeugreifens zu befestigen, verursacht dies eine hohe Gewichtskonzentration an einer Stelle der Reifeninnenseite des Fahrzeugreifens. Wird der Fahrzeugreifen nun bei Verwendung einer hohen Rotationsgeschwindigkeit ausgesetzt, führt die hohe Gewichtskonzentration des Elektronikmoduls zu einem spürbaren und/oder messbaren Unwuchtverhalten bzw. Geräuschverhalten des Fahrzeugreifens, was jedoch zu verhindern ist.

Für den Fahrzeugreifen ist es deshalb vorgesehen, dass die Membran mit dem Elektronikmodul gekoppelt ist. Durch die Kopplung der Membran mit dem Elektronikmodul kann eine funktionelle, elektrische und/oder mechanische Kopplung gemeint sein. Dies bietet den Vorteil, dass die Membran einen Teil des Elektronikmoduls ersetzt und/oder eine Funktion für das Elektronikmodul bereitstellt. So kann die Membran beispielsweise als Antenne für das Elektronikmodul wirken, indem die Membran mit dem Elektronikmodul gekoppelt ist. Das Elektronikmodul als solches benötigt in diesem Beispiel deshalb keine eigene Antenne. Dadurch kann das Gewicht des Elektronikmoduls reduziert werden, was ein besseres Unwuchtverhalten und ein besseres Geräuschverhalten des Fahrzeugreifens gewährleisten kann. Ein anderes Beispiel für die Kopplung der Membran mit dem Elektronikmodul kann sich beispielsweise auf eine mechanische Kopplung zwischen der Membran und dem Elektronikmodul beziehen. So kann das Elektronikmodul von der Membran gehalten und/oder gestützt sein. Dies ist insbesondere bei Fahrzeugreifen von Vorteil, die hohen Beschleunigungen ausgesetzt sein können. Denn aufgrund der bevorzugten mechanischen Kopplung des Elektronikmoduls an die Membran ist das Elektronikmodul nicht mehr notwendigerweise nur direkt oder indirekt an der Reifeninnenseite mechanisch befestigt. Vielmehr kann in diesem Fall auch eine zusätzliche mechanische Befestigung des Elektronikmoduls aufgrund der Kopplung zu der Membran und aufgrund der Verbindung der Membran zum Schaumstoff an die Reifeninnenseite gewährleistet werden. Wird das Elektronikmodul nun in Radialrichtung und/oder in Umfangsrichtung des Fahrzeugreifens stark beschleunigt, kann die Membran dazu beitragen, dass sich das Elektronikmodul nicht von der Reifeninnenseite des Fahrzeugreifens löst. Insbesondere wenn die Membran aus elektrisch leitfähigen Material ist oder dieses aufweist, kann auch eine elektrische Kopplung zwischen der Membran und dem Elektronikmodul vorgesehen sein. So kann die Membran beispielsweise als elektrische Verbindungsleitung für das Elektronikmodul zu einem weiteren Bauteil wirken. Dies kann beispielsweise derart ausgebildet sein, dass die Membran eine elektrische Verbindung zwischen dem Elektronikmodul und einem weiteren Elektronikmodul des Fahrzeugreifens oder eine elektrische Verbindung zwischen dem Elektronikmodul und einer Batterie bildet.

Die Membran kann also eine Doppelfunktion aufweisen. Die Membran ist zur Dämpfung von Schallwellen ausgebildet. Außerdem ist die Membran zur Ankopplung an das Elektronikmodul ausgebildet, um durch diese Kopplung eine funktionale, mechanische und/oder elektrische Verbindung zu dem Elektronikmodul zu gewährleisten. Unter der elektrischen Verbindung kann insbesondere auch eine Funkverbindung verstanden werden.

Eine vorteilhafte Ausgestaltung des Fahrzeugreifens zeichnet sich dadurch aus, dass die Membran zumindest abschnittsweise an dem Schaumstoff befestigt ist. So kann die Membran beispielsweise an einer Oberseite des Schaumstoffs angeordnet und/oder dort mit dem Schaumstoff befestigt sein. Die Membran kann stoffschlüssig mit dem Schaumstoff verbunden sein. Durch die mechanische Befestigung der Membran an dem Schaumstoff kann der Schaumstoff zur Absorption von Schwingungen der Membran dienen und/oder wirken. Dies gewährleistet eine besonders vorteilhafte Dämpfung von Schallwellen, die sich in dem Fahrzeugreifen ausbreiten können.

Eine weitere vorteilhafte Ausgestaltung des Fahrzeugreifens zeichnet sich dadurch aus, dass die Membran zumindest abschnittsweise in den Schaumstoff eingebettet ist. So kann beispielsweise ein Endabschnitt der Membran in den Schaumstoff eingebettet sein. Ein weiterer Abschnitt kann von dem Schaumstoff abstehen und/oder wegragen. Es ist jedoch auch möglich, dass die Membran vollständig oder zumindest großteilig in den Schaumstoff eingebettet ist. Durch die Einbettung kann eine stoffflüssige Verbindung zwischen der Membran und dem Schaumstoff gebildet sein. Dies gewährleistet eine mechanische Befestigung in der Membran an dem Schaumstoff. Durch diese mechanische Befestigung kann der Schaumstoff ebenfalls zur Absorption von Schwingungen der Membran dienen und/oder wirken. Dies gewährleistet ebenfalls eine besonders vorteilhafte Dämpfung von Schallwellen, die sich in dem Fahrzeugreifen ausbreiten können.

Eine weitere vorteilhafte Ausgestaltung des Fahrzeugreifens zeichnet sich dadurch aus, dass zumindest eine Außenseite des Elektronikmoduls an der Reifeninnenseite befestigt ist. Diese Befestigung kann mittels eines Haftmittels, beispielsweise mittels einer Klebeschicht, erfolgen. Das Elektronikmodul kann deshalb besonders bevorzugt stoffschlüssig an der Reifeninnenseite befestigt sein.

Eine weitere vorteilhafte Ausgestaltung des Fahrzeugreifens zeichnet sich dadurch aus, dass der Schaumstoff zwischen der Reifeninnenseite und dem Elektronikmodul derart angeordnet ist, sodass das Elektronikmodul auf dem Schaumstoff angeordnet und/oder zumindest teilweise in den Schaumstoff eingebettet ist. Der Schaumstoff kann also zur Anordnung des Elektronikmoduls an der Reifeninnenseite dienen und/oder dazu ausgebildet sein. Außerdem ist es möglich, dass das Elektronikmodul mittels des Schaumstoffs an der Reifeninnenseite befestigt ist. Wird der Schaumstoff zur Befestigung des Elektronikmoduls verwendet, kann es vorgesehen sein, dass das Elektronikmodul indirekt an der Reifeninnenseite befestigt ist. Dies ist insbesondere dann der Fall, wenn zwischen der Reifeninnenseite und dem Elektronikmodul ein Teil des Schaumstoffs angeordnet ist. Dies bietet jedoch auch Vorteile. Denn wenn die Lauffläche in Radialrichtung beansprucht wird, kann dies zu einer Beschleunigung des Elektronikmoduls in Radialrichtung führen. Ist der Schaumstoff zwischen der Reifeninnenseite und dem Elektronikmodul angeordnet, kann die auf das Elektronikmodul wirkende Kraft gedämpft sein. Der Schaumstoff kann also auch zum Schutz des Elektronikmoduls dienen.

Eine vorteilhafte Ausgestaltung des Fahrzeugreifens zeichnet sich dadurch aus, dass das Elektronikmodul direkt mit der Membran gekoppelt ist. So kann die Membran beispielsweise eine direkte mechanische Verbindung zu dem Elektronikmodul aufweisen. Dies ist insbesondere dann von Vorteil, wenn die Membran auch zum Befestigen, Stützen und/oder Halten des Elektronikmoduls dient und/oder dazu ausgebildet ist. Ist beispielsweise ein Abschnitt der Membran in den Schaumstoff eingebettet und ist ein anderer Abschnitt der Membran direkt, insbesondere durch eine mechanische, direkte Verbindung, mit dem Elektronikmodul verbunden bzw. gekoppelt, so kann die Membran ebenfalls zumindest dazu beitragen, dass das Elektronikmodul an der vorgesehenen Stelle an der Reifeninnenseite des Fahrzeugreifens angeordnet ist und bleibt. Dies gilt insbesondere für den Fall, wenn der Schaumstoff als solcher ebenfalls zur Befestigung des Elektronikmoduls dient. Denn in diesem Fall können die Membran und der Schaumstoff gemeinsam zur Befestigung, Halten und/oder Stützen des Elektronikmoduls dienen und/oder dazu ausgebildet sein. Die direkte Kopplung der Membran an das Elektronikmodul kann jedoch auch andere Vorteile bieten. Dies gilt insbesondere dann, wenn die Membran eine Funktion für das Elektronikmodul bereitstellt. Dient die Membran beispielsweise als Kühlkörper für ein Elektronikbauteil des Elektronikmoduls, so gewährleistet die direkte Kopplung bzw. die direkte Verbindung zwischen der Membran und dem Elektronikmodul bzw. dem zugehörigen Bauteil, dass thermische Energie von dem Elektronikmodul an die Membran übertragen werden kann, die sodann die thermische Energie an die Umgebung, insbesondere den Schaumstoff und/oder den restlichen Fahrzeugreifen, übertragen kann.

Eine weitere vorteilhafte Ausgestaltung des Fahrzeugreifens zeichnet sich dadurch aus, dass das Elektronikmodul mittels der Membran an dem Schaumstoff befestigt ist. Die Membran kann also auch als mechanisches Verbindungsmittel wirken. In diesem Zusammenhang wird auf die vorangegangen Erläuterungen in analoger Weise Bezug genommen. Es kann jedoch auch vorgesehen sein, dass das Elektronikmodul nur mittels der Membran verbunden ist, und die Membran mit dem Schaum verbunden ist. In diesem Fall kann also das Elektronikmodul mittels der Membran an dem Schaumstoff hängend befestigt sein. Dabei kann es vorgesehen sein, dass das Elektronikmodul keinen direkten Kontakt zu dem Schaumstoff und/oder keinen direkten Kontakt zu der Reifeninnenseite des Fahrzeugreifens aufweist. Es ist jedoch vorgesehen, dass das Elektronikmodul beispielsweise durch einen trennenden Luftspalt zu der Reifeninnenseite angeordnet ist. Der Luftspalt kann beispielsweise in Radialrichtung nur wenige Millimeter, beispielsweise weniger als fünf Millimeter, betragen. Diese Anordnung wird deshalb ebenfalls als eine indirekte Anordnung des Elektronikmoduls an der Reifeninnenseite aufgefasst, da das Elektronikmodul über die Membran und dem Schaumstoff eine Verbindung zu der Reifeninnenseite aufweist und das Elektronikmodul besonders dicht an der Reifeninnenseite, nämlich nur beabstandet durch einen sehr schmalen Luftspalt, zu dieser angeordnet ist. Die Membran kann dabei ausgebildet sein, eine schwingungsdämpfende und/oder schwingungsisolierende Aufhängung für das Elektronikmodul zu bilden. Dies bietet den Vorteil, dass das Elektronikmodul besonders geschützt vor mechanischen Stößen sein kann. Außerdem kann durch diese Befestigungsart eine besonders einfache Applikation des Elektronikmoduls erfolgen. Denn das Elektronikmodul bedarf in diesem Fall keiner direkten stoffflüssigen Verbindung zu der Reifeninnenseite. Zusammenfassend kann also festgehalten werden, dass die Befestigung des Elektronikmoduls mittels der Membran an den Schaum eine vollständige oder eine schützende Befestigung sein kann. Die Befestigung kann also zum Aufhängen, Abstützen und/oder Halten dienen.

Eine vorteilhafte Ausgestaltung des Fahrzeugreifens zeichnet sich dadurch aus, dass das Elektronikmodul indirekt mittels mindestens einem Verbindungsmittel mit der Membran gekoppelt ist. Dient die Membran beispielsweise als funktionales Bauteil für das Elektronikmodul und/oder dient die Membran zur Bereitstellung einer Funktion für das Elektronikmodul, ist es nicht immer notwendig, dass eine direkte und/oder mechanische Verbindung zwischen der Membran und dem Elektronikmodul besteht. Deshalb kann auch das Verbindungsmittel eingesetzt werden, um die Kopplung zwischen dem Elektronikmodul und der Membran zu schaffen. Das Verbindungsmittel kann beispielsweise ein elektrisches Verbindungskabel sein. In diesem Fall kann eine elektrische und/oder mechanische Verbindung zwischen dem Elektronikmodul und der Membran über das Verbindungsmittel gewährleistet und/oder gebildet sein. Darüber hinaus ist es möglich, dass zwischen dem Elektronikmodul und der Membran keine mechanische und/oder durch mechanische Elemente geschaffene Verbindung vorhanden ist. So kann dem Elektronikmodul beispielsweise eine Funkeinheit zugeordnet sein. Diese Funkeinheit kann als ein Verbindungsmittel dienen. Denn zwischen der Funkeinheit und der Membran kann beispielsweise eine Funkverbindung hergestellt sein, die eine Kopplung zwischen dem Elektronikmodul und der Membran gewährleistet. Die Funkverbindung kann als eine elektrische Verbindung bzw. als eine elektrische Funkverbindung verstanden sein. Durch die Funkverbindung können elektrische Signale von dem Elektronikmodul an die Membran, oder umgekehrt, übertragen werden.

Eine vorteilhafte Ausgestaltung des Fahrzeugreifens zeichnet sich dadurch aus, dass die Membran zum Empfang und/oder zum Aussenden einer elektromagnetischen Welle ausgebildet ist. Die Membran kann als Antenne ausgebildet sein. Dabei kann die Membran direkt mit dem Elektronikmodul gekoppelt sein, sodass die Membran eine Antenne für das Elektronikmodul bildet. Somit kann über die Membran eine elektromagnetische Welle ausgesendet werden, die durch ein elektrisches Signal des Elektronikmoduls verursacht wird. Es ist aber auch möglich, dass die Membran zum Empfang einer elektromagnetischen Welle ausgebildet ist, sodass von der Membran ein elektrisches Signal an das Elektronikmodul gesendet und/oder übertragen wird. Sind die Membran und das Elektronikmodul über Funk miteinander verbunden, so kann die Membran dazu ausgebildet sein, ein Funksignal an das Elektronikmodul zu senden und/oder in umgekehrter Weise ein Funksignal von dem Elektronikmodul zu empfangen. Bei dem Funksignal handelt es sich vorzugsweise um ein Signal basierend auf einer elektromagnetischen Welle.

Eine weitere vorteilhafte Ausgestaltung des Fahrzeugreifens zeichnet sich dadurch aus, das die Membran elektrisch leitfähig ausgebildet ist. Die Membran kann beispielsweise elektrische leitfähiges Material aufweisen und/oder daraus ausgebildet sein. So kann die Membran aus Metall gebildet sein. Beispielsweise kann die Membran als Aluminium-Membran ausgebildet sein. Durch die elektrisch leitfähige Eigenschaft der Membran ist es möglich, dass die Membran elektrischen Strom leiten kann. Dies ist insbesondere dann von Vorteil, wenn die Membran direkt mit dem Elektronikmodul verbunden ist, denn in diesem Fall kann die Membran als elektrisches Verbindungsmittel zu einem weiteren Bauteil dienen.

Eine weitere vorteilhafte Ausgestaltung des Fahrzeugreifens zeichnet sich dadurch aus, dass die Membran zum Übertragen von elektrischer Energie, insbesondere zum Leiten eines elektrischen Stroms, ausgebildet ist. So kann die Membran beispielsweise mindestens zwei elektrische Leiter aufweisen und/oder ausbilden. Die Membran kann beispielsweise zwei Leiterbahnen oder noch weitere Leiterbahnen aufweisen, wobei jede Leiterbahn zum Leiten von elektrischem Strom ausgebildet ist. Die Leiterbahnen können elektrisch voneinander isoliert sein. Hierzu kann die Membran entsprechend ausgebildet sein. Sofern noch weitere Leiterbahnen vorgesehen sind, können auch diese von der Membran elektrisch zu den übrigen Leiterbahnen elektrisch isoliert ausgebildet sein. Über eine oder mehrere der Leiterbahnen kann elektrischer Strom fließen. Deshalb ist es möglich, dass ein Elektronikmodul beispielsweise über zwei Leiterbahnen, die von der Membran gebildet sind, mit einem anderen Bauteil, insbesondere einem weiteren Elektronikmodul, elektrisch verbunden ist. Außerdem kann die Membran ausgebildet sein, um ein elektrisches Leiterbahnnetzwerk auszubilden.

Eine weitere vorteilhafte Ausgestaltung des Fahrzeugreifens zeichnet sich dadurch aus, dass die Membran als elektrische Energiequelle ausgebildet ist. So kann der Membran beispielsweise eine Batterie oder ein Akku zugeordnet sein. Dieser kann an der übrigen Membran befestigt sein. Es ist jedoch auch möglich, dass die Membran zum kontaktlosen Empfang von elektrischer Energie ausgebildet ist, so beispielsweise zum Empfangen von elektrischer Energie per Induktion. In diesem Fall kann die Membran ebenfalls als Energiequelle für ein weiteres elektrisches Bauteil, insbesondere für das Elektronikmodul dienen. Ist die Membran beispielsweise mit dem Elektronikmodul gekoppelt und außerdem zum Empfangen von elektrischer Energie ausgebildet, so kann das Elektronikmodul mit elektrischer Leistung über die Membran versorgt werden.

Eine vorteilhafte Ausgestaltung des Fahrzeugreifens zeichnet sich dadurch aus, dass mindestens ein weiteres, derartiges Elektronikmodul direkt oder indirekt an der Reifeninnenseite angeordnet ist. Somit kann der Fahrzeugreifen mehrere Elektronikmodule aufweisen, die jeweils direkt oder indirekt an der Reifeninnenseite angeordnet sind. Die mehreren Elektronikmodule sind nicht notwendigerweise gleich ausgestaltet, obwohl dies möglich ist. Vielmehr können die Elektronikmodule untereinander unterschiedlich ausgebildet sein. Für das mindestens eine weitere Elektronikmodul wird jedoch zumindest in analoger Weise auf die vorangegangen Erläuterungen, bevorzugten Merkmale und/oder Effekte verwiesen, wie sie im Zusammenhang mit dem zuvor erläuterten Elektronikmodul erläutert worden sind, Bezug genommen.

Eine weitere vorteilhafte Ausgestaltung des Fahrzeugreifens zeichnet sich dadurch aus, dass die Elektronikmodule mit der Membran gekoppelt sind. Weist der Fahrzeugreifen beispielsweise zwei oder noch weitere Elektronikmodule auf, so kann jedes der Elektronikmodule mit der gleichen Membran gekoppelt sein. Bezüglich der Kopplung zwischen der Membran und jedem der Elektronikmodul wird auf die vorangegangenen, bevorzugten Erläuterungen, bevorzugten Merkmale, Effekte und/oder Vorteile verwiesen, wie sie bereits im Zusammenhang mit der Kopplung der Membran und dem Elektronikmodul erläutert worden sind. Indem mehrere Elektronikmodule mit der gleichen Membran gekoppelt sind, kann die Membran eine funktionale, elektrische und/oder mechanische Kopplung zwischen den Elektronikmodulen bilden. So können die Elektronikmodule beispielsweise über die Membran elektrisch miteinander gekoppelt sein, um elektrische Energie und/oder um elektrische Signale auszutauschen. Wird beispielsweise ein Elektronikmodul durch eine Funkeinheit gebildet und ein weiteres Elektronikmodul durch eine Sensoreinheit, beispielsweise mit einem Drucksensor, einem Temperatursensor oder einem Beschleunigungssensor, so kann die Membran eine elektrische Signalverbindung zwischen dem Sensormodul und der Funkeinheit bilden, sodass ein von der Sensoreinheit erfasster Sensorwert durch ein elektrisches Signal repräsentiert wird, das über die Membran von der Sensoreinheit an die Funkeinheit übertragen werden kann, die wiederum basierend auf dem übertragenden, elektrischen Signal ein Funksignal erzeugt, dass an einen Funkempfänger übertragen werden kann, und zwar per Funk. Mit der Membran und den mehreren Elektronikmodulen kann deshalb eine funktionale Aufteilung von Funktionen geschaffen werden. Dies wiederum gewährleistet die in Umfangsrichtung verteilte Anordnung von Elektronikmodulen, was eine besonders geringe Unwucht ermöglicht.

Eine vorteilhafte Ausgestaltung des Fahrzeugreifens zeichnet sich dadurch aus, dass die Membran eine elektrische Verbindung zwischen den Elektronikmodulen bildet. Hierbei handelt es sich vorzugsweise um die Elektronikmodule des Fahrzeugreifens. Darüber hinaus wird auf die vorangegangenen Erläuterungen zumindest in analoger Weise verwiesen, wobei die elektrische Verbindung die Kopplung zwischen der Membran und den Elektronikmodulen bilden kann. Die elektrische Verbindung kann auch dazu dienen, um elektrische Leistung von einem Elektronikmodul zu einem anderen Elektronikmodul zu übertragen. So kann beispielsweise ein Elektronikmodul eine Batterie aufweisen und/oder davon gebildet sein. Von diesem Elektronikmodul kann elektrische Leistung über die Membran an ein weiteres Elektronikmodul übertragen werden, wenn dies ebenfalls mit der Membran elektrisch verbunden ist.

Eine weitere vorteilhafte Ausgestaltung des Fahrzeugreifens zeichnet sich dadurch aus, dass mindestens eine weitere derartige Membran mit dem Schaumstoff verbunden ist, wobei jedes Elektronikmodul mit mindestens einer der Membranen gekoppelt ist. So kann es beispielsweise vorgesehen sein, dass jedes Elektronikmodul mit genau einer Membran gekoppelt ist. In diesem Fall kann beispielsweise pro Membran genau ein Elektronikmodul vorgesehen sein. Dies ist jedoch nicht notwendig. Vielmehr kann es vorgesehen sein, dass mehrere Elektronikmodule mit jeweils der gleichen Membran verbunden sind. Die Membrane können also die Verbindungen zwischen den Elektronikmodulen gewährleisten. Die Verbindungen können dabei mechanische, elektrische und/oder funktionale Verbindungen sein. Somit ist es möglich, dass jedes Elektronikmodul mit mindestens zwei Membranen oder sogar mit jeder Membran gekoppelt sein kann. Als besonders vorteilhaft hat es sich herausgestellt, wenn die Membranen parallel zueinander ausgerichtet und/oder angeordnet sind. Denn in diesem Fall können die Elektronikmodule in dem Zwischenraum angeordnet sein, der sich zwischen der parallelen Anordnung der Membranen bildet. Dies bietet den Vorteil, dass jedes Elektronikmodul eine Kopplung zu jeder der Membranen aufweisen kann.

Als besonders vorteilhaft hat es sich herausgestellt, wenn eine oder jede Membran lateral, horizontal oder radial ausgerichtet ist. So kann jede Membran beispielsweise in Radialrichtung ausgerichtet sein. Es ist jedoch auch möglich, dass eine oder jede Membran in Umfangsrichtung des Fahrzeugreifens ausgerichtet und/oder ausgebildet ist. Ebenfalls ist es möglich, dass eine oder jede Membran in Axialrichtung ausgerichtet ist. Zwei in Radialrichtung oder Axialrichtung voneinander beabstandete Membranen können zwei Leiterbahnen zur Übertragung von elektrischer Energie bilden. Dabei können die Membranen von dem Schaumstoff elektrisch isoliert sein. Der Schaumstoff kann also elektrisch isolierend oder als Isolator ausgebildet sein. Wird elektrische Energie mittels einer oder der Membranen übertragen, kann der Schaumstoff als Isolator dienen. Wird von einer Membran eine Leiterbahn gebildet, so kann jede Membran einen Pol, insbesondere einen Pluspol oder einen Minuspol, bilden. Der mindestens eine Pol kann ein Anschlusspol für ein Elektronikmodul bilden. Somit kann ein Elektronikmodul mit mindestens einem der zuvor genannten Pole gekoppelt und/oder verbunden sein.

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
- Figur 1: zeigt eine vorteilhafte Ausgestaltung eines Fahrzeugreifens in einer schematischen und teiltransparenten Ansicht.
- Figur 2: zeigt einen Ausschnitt einer weiteren vorteilhaften Ausgestaltung eines Fahrzeugreifens in einer schematischen Schnittdarstellung.
- Figuren 3 bis 6: zeigen jeweils eine vorteilhafte Ausgestaltung des Fahrzeugreifens in einer schematischen Querschnittsansicht.

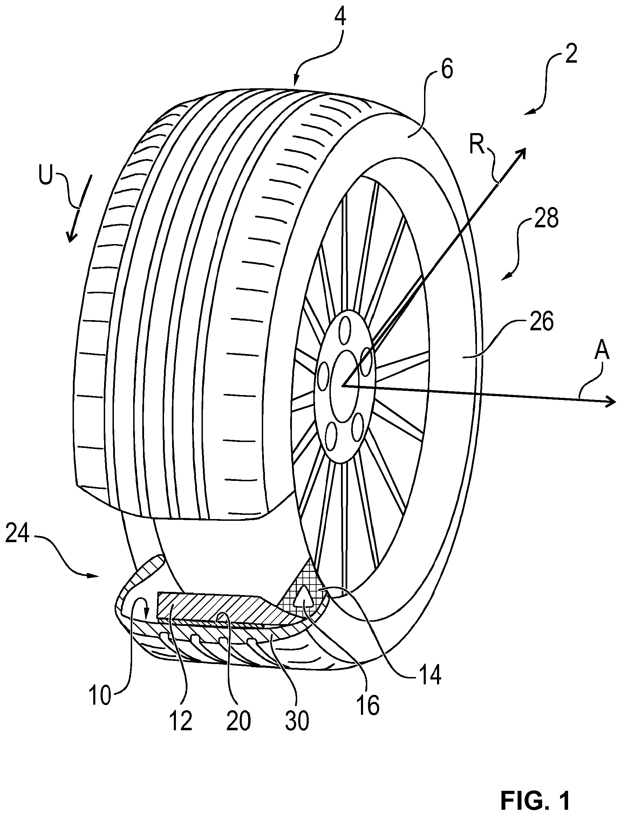

In der Figur 1 ist eine vorteilhafte Ausgestaltung eines Fahrzeugreifens 2 in einer schematischen und teiltransparenten Darstellung gezeigt. Dabei ist ein Ausschnitt 24 des Fahrzeugreifens 2 transparent dargestellt. Dadurch lässt sich der Aufbau des Fahrzeugreifens 2 erkennen. Der Fahrzeugreifen 2 ist beispielhaft an einer Felge 26 befestigt. Zusammen können der Fahrzeugreifen 2 und die Felge 26 ein Rad 28 bilden. Der Fahrzeugreifen 2 wird auch als Reifen 2 bezeichnet.

In der praktischen Anwendung kann der Fahrzeugreifen 2 in Umfangsrichtung U abrollen. Dazu kann der Fahrzeugreifen 2 mittels der Felge 26 an einer Fahrzeugachse drehbar gelagert befestigt sein. Rollt der Fahrzeugreifen 2 auf einem Untergrund ab, kommt die Lauffläche 4 des Fahrzeugreifens 2 mit dem Untergrund in Kontakt. Die Lauffläche 4 kann von einem Gürtelabschnitt 30 des Fahrzeugreifens 2 gebildet sein. Bei dem Gürtelabschnitt 30 handelt es sich vorzugsweise um einen ringförmigen Abschnitt des Fahrzeugreifens 2. Zu jeder Stirnseite des Gürtelabschnitts 30 geht der Fahrzeugreifen 2 in eine Seitenwand 6 bzw. 8 über. Das radialinnenseitige Ende 32 bzw. 34 der jeweiligen Seitenwand 6 bzw. 8 ist formschlüssig und/oder kraftschlüssig mit der Felge 26 lösbar verbunden bzw. verbindbar. Zwischen dem Fahrzeugreifen 2 und der Felge 26 kann ein Reifeninnenraum 36 gebildet sein. Dieser kann mit einem Arbeitsgas, insbesondere mit Luft, gefüllt sein, sodass ein Luftdruck in dem Reifeninnenraum 36 entsteht. Der Fahrzeugreifen 2 weist außerdem eine Reifeninnenseite 10 auf. Vorzugsweise ist die Reifeninnenseite 10 radialinnenseitig und gegenüberliegend zu der Lauffläche 4 ausgebildet. Die Reifeninnenseite 10 kann also eine umlaufende oder ringförmige Innenseite des Fahrzeugreifens 2 sein. Vorzugsweise wird die Reifeninnenseite 10 von dem Gürtelabschnitt 30 des Fahrzeugreifens 2 gebildet.

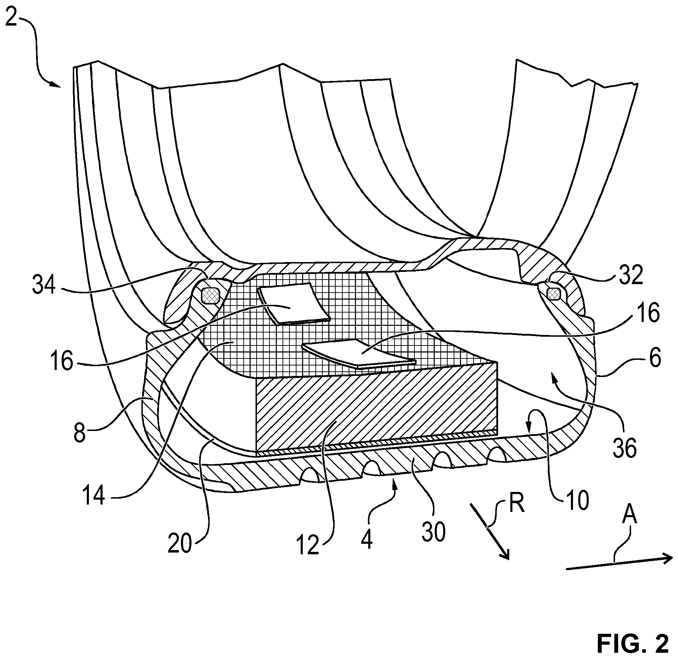

Aus der Figur 2 ist zu erkennen, dass mehrere Elektronikmodule 16 indirekt an der Reifeninnenseite 10 des Fahrzeugreifens 2 angeordnet sein können. Dies ist jedoch nicht notwendig. So kann es für den Fahrzeugreifen 2 vorgesehen sein, dass dieser nur ein einziges Elektronikmodul 16 aufweist, wie es in der Figur 1 angedeutet ist. Auch hier ist es vorgesehen, dass das Elektronikmodul 16 indirekt an der Reifeninnenseite 10 des Fahrzeugreifens 2 angeordnet ist.

Der Fahrzeugreifen 2 weist außerdem Schaumstoff 12 auf. Der Schaumstoff 12 ist vorzugsweise mittels einer Klebeschicht 20 an der Reifeninnenseite 10 stoffflüssig befestigt. Es kann jedoch auch vorgesehen sein, dass der Schaumstoff 12 unmittelbar mit der Reifeninnenseite 10 des Fahrzeugreifens 2 stoffflüssig verbunden ist. Außerdem hat es sich als vorteilhaft herausgestellt, wenn der Schaumstoff 12 ringförmig ausgestaltet ist. So kann sich der Schaumstoff 12 in Umfangsrichtung U umlaufend erstrecken, sodass der Schaumstoff 12 ebenfalls umlaufend direkt oder indirekt mit der Reifeninnenseite 10 des Fahrzeugreifens 2 verbunden ist. Bei dem Schaumstoff 12 handelt es sich beispielsweise um ein Polyurethan-Schaumstoff 12. Besonders bevorzugt ist der Schaumstoff 12 zur Dämpfung von Schallwellen ausgebildet. Dazu kann der Schaumstoff 12 porenförmig ausgebildet sein und/oder Poren aufweisen.

Außerdem weist der Fahrzeugreifen 2 eine Membran 14 auf. Die Membran 14 ist mit dem Schaumstoff 12 verbunden. Außerdem ist die Membran 14 zur Dämpfung von Schallwellen ausgebildet. Die Membran 14 kann beispielsweise als eine Aluminium-Membran 14 ausgebildet sein. Dabei kann die Membran 14 derart ausgestaltet sein, dass sie von einer Schallwelle zu Schwingungen angeregt werden kann, sodass die Membran 14 eine Dämpfung der Schallwelle verursacht. Dieser Effekt wird vorzugsweise dadurch verbessert und/oder verstärkt, dass die Membran 14 mit dem Schaumstoff 12 verbunden ist. Eine periodische Bewegung der Membran 14 kann also von dem Schaumstoff 12 gedämpft werden. Dies trägt somit ebenfalls zur Dämpfung von Schallwellen bei, die sich in dem Reifeninnenraum 36 ausbilden können.

Darüber hinaus ist es für den Fahrzeugreifen 2 vorgesehen, dass die Membran 14 mit dem Elektronikmodul 16 gekoppelt ist. Sind mehrere Elektronikmodule 16 vorgesehen, so kann die Membran 14 mit jedem oder mit mehreren Elektronikmodulen 16 gekoppelt sein. Dies ist jedoch nicht zwingend notwendig. Im Weiteren wird deshalb der Einfachheit halber auf die Kopplung zwischen der Membran 14 und einem der Elektronikmodulen 16 eingegangen. Dies soll repräsentativ für eine mögliche Ausgestaltung stehen, bei der die Membran 14 auch mit mehreren Elektronikmodulen 16 gekoppelt sein kann. Für die Kopplungen können die folgenden Erläuterungen deshalb in analoger Weise gelten.

Die Membran 14 kann mechanisch, elektrisch und/oder funktional mit dem Elektronikmodul 16 gekoppelt sein. So kann es beispielsweise vorgesehen sein, dass das Elektronikmodul 16 mechanisch an der Membran 14 befestigt ist. Die Membran 12 selbst ist vorzugsweise zumindest abschnittsweise an dem Schaumstoff 12 befestigt und/oder kann zumindest abschnittsweise in den Schaumstoff 12 eingebettet sein.

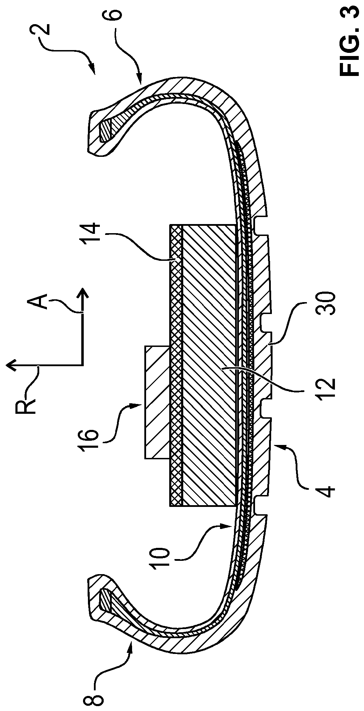

Mögliche Ausgestaltungen für eine mechanische Kopplung zwischen der Membran 14 und dem Elektronikmodul 16 sind aus den Figuren 3 bis 6 beispielhaft zu entnehmen.

In der Figur 3 ist eine beispielhafte Ausgestaltung des Fahrzeugreifens 2 in einer schematischen Querschnittsansicht gezeigt. Dabei ist der Schaumstoff 12 direkt oder über eine Klebeschicht 20 an der Reifeninnenseite 10 befestigt. Radialinnenseitig ist an dem Schaumstoff 12 die Membran 14 angeordnet und/oder befestigt. Radialinnenseitig ist darüber hinaus ein Elektronikmodul 16 an der Membran 14 befestigt. Die Membrane 14 kann also als mechanisches Verbindungsmittel zwischen dem Schaumstoff 12 und dem Elektronikmodul 16 wirken. Dies ist jedoch nicht zwingend notwendig. So kann das Elektronikmodul 16 auch eine direkte mechanische Verbindung zu dem Schaumstoff 12 und/oder zu der Reifeninnenseite 10 des Fahrzeugreifens aufweisen. Dies ist jedoch nicht in Figur 3 dargestellt. Zusammenfassend lässt sich festhalten, dass in der Figur 3 ein beispielhafter Aufbau dargestellt ist, bei dem der Schaumstoff 12, die Membran 14 und das Elektronikmodul 16 in Radialrichtung R aufeinander befestigt und/oder hintereinander angeordnet sind.

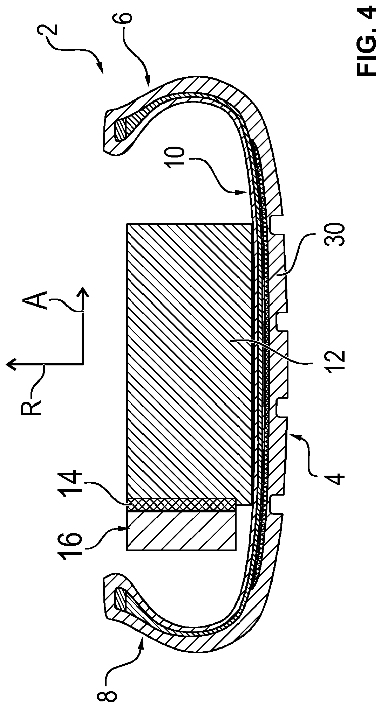

Es besteht jedoch auch die Möglichkeit, dass eine analoge Anordnung in Axialrichtung A vorgesehen ist. Dies ist beispielhaft in der Figur 4 dargestellt. Hier wird eine beispielhafte Ausgestaltung des Fahrzeugreifens 2 wiedergegeben, bei der der Schaumstoff 12 direkt oder über eine Klebeschicht 20 an der Reifeninnenseite 10 befestigt ist. Seitlich in Axialrichtung A ist die Membran 14 an dem Schaumstoff 12 angeordnet, die eine mechanische Verbindung zu dem Elektronikmodul 16 bereitstellt, dass ebenfalls axialaußenseitig zu der Membran 14 angeordnet ist. Mit dieser Anordnung kann eine besonders dichte Anordnung des Elektronikmoduls 16 an der Reifeninnenseite 10 des Fahrzeugreifens 2 gewährleistet werden. Es ist zwar nicht dargestellt, jedoch kann das Elektronikmodul 16 hierbei eine unmittelbare Verbindung zu der Reifeninnenseite 10 des Fahrzeugreifens 2 haben.

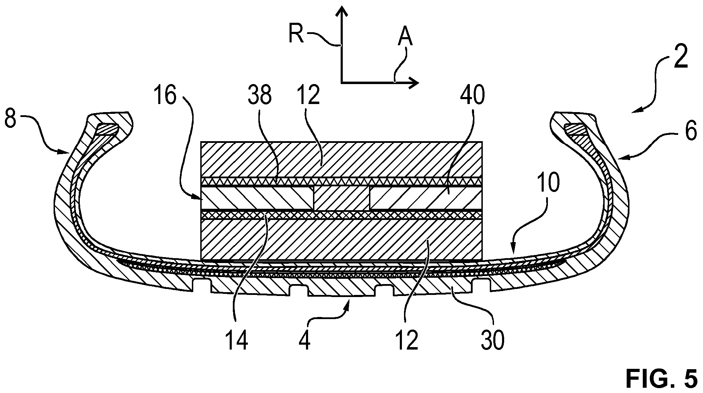

Eine weitere vorteilhafte Ausgestaltung des Fahrzeugreifens 2 ist in der Figur 5 dargestellt. Dabei ist es bevorzugt vorgesehen, dass der Schaumstoff 12 direkt oder über eine Klebeschicht 20 mit der Reifeninnenseite 10 des Fahrzeugreifens 2 verbunden ist. Außerdem ist die Membran 14 in den Schaumstoff 12 eingebettet. Ferner weist der Fahrzeugreifen 2 eine weitere Membran 38 auf. Diese weitere Membran 38 ist ebenfalls in dem Schaumstoff 12 derart eingebettet, dass sie zu der anderen Membran 14 beabstandet, und vorzugsweise parallel hierzu, angeordnet ist. Zwischen den beiden Membranen 14, 38 können sowohl das Elektronikmodul 16 sowie ein weiteres Elektronikmodul 40 angeordnet sein. Jedes der beiden Elektronikmodule 16, 40 kann mit jeweils beiden Membranen 14, 38 gekoppelt sein. Außerdem ist es bevorzugt vorgesehen, dass der Schaumstoff 12 isolierend, also vorzugsweise elektrisch isolierend, ausgebildet ist. Denn die beiden Membrane 14, 38 können jeweils elektrisch leitend ausgebildet sein. Sie können deshalb elektrische Leiter bilden. Auf diese Weise können die Membranen 14, 38 als elektrische Verbindungen zwischen den beiden Elektronikmodulen 16, 40 wirken. Denn die Kopplung eines jeden Elektronikmoduls 16, 40 mit den beiden Membranen 14, 38 kann ebenfalls eine elektrische Kopplung bzw. als eine elektrische Verbindung ausgestaltet sein. Über die beiden Membrane 14, 38 können deshalb elektrische Signale zwischen den beiden Elektronikmodulen 16, 40 ausgetauscht werden.

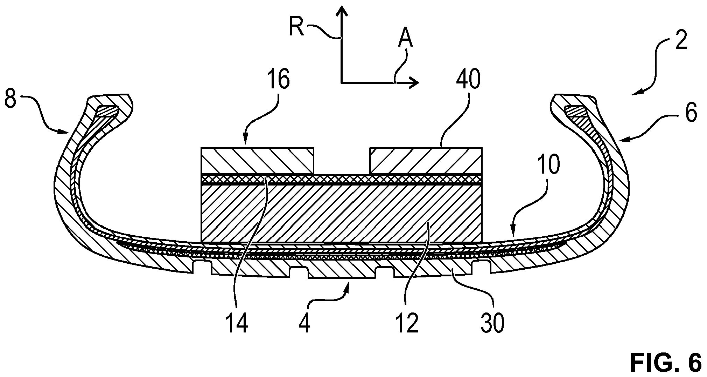

In der Figur 6 ist eine weitere vorteilhafte Ausgestaltung des Fahrzeugreifens 2 dargestellt. Diese Ausgestaltung des Fahrzeugreifens 2 entspricht zumindest im Wesentlichen der vorteilhaften Ausgestaltung des Fahrzeugreifens 2, wie sie im Zusammenhang mit Figur 3 erläutert worden ist. Allerdings ist für den Fahrzeugreifen 2, wie dieser beispielhaft in der Figur 6 dargestellt ist, ein weiteres Elektronikmodul 40 vorgesehen, dass radialinnenseitig auf der Membran 14 angeordnet und/oder dort befestigt ist.

Aus der Zusammenschau der Figuren 1 und 3 ist beispielhaft zu entnehmen, dass das Elektronikmodul 16 mit der Membran 14 gekoppelt sein kann. Hierbei kann es sich sowohl um eine mechanische Kopplung als auch um eine elektrische Kopplung handeln. So kann die Membran 14 dazu beitragen, dass das Elektronikmodul 16 mechanisch mit dem Schaumstoff 12 verbunden ist. Der Schaumstoff 12 kann elektrisch isolierend ausgebildet sein. Dies bietet den Vorteil, dass das Elektronikmodul 16 die Membran 14 als funktionales Bauteil verwenden kann. Die Membran 14 kann beispielsweise als eine Antenne ausgebildet sein. Wird die Membran 14 als Antenne elektrisch mit dem Elektronikmodul 16 verbunden, so kann das Elektronikmodul 16 über die Membran 14 elektromagnetische Wellen aussenden und/oder empfangen. Ist das Elektronikmodul 16 beispielsweise mit einem Sensor und einer Funkeinheit ausgestattet, so kann von dem Sensor ein reifenrelevanter Messwert, beispielsweise ein Druck, eine Temperatur und/oder eine Beschleunigung, erfasst werden. Mittels der Funkeinheit kann ein den Messwert repräsentierendes Funksignal über die als Antenne ausgebildete Membran 14 versendet werden. Dies kann von einer Empfängereinheit, die beispielsweise an einem Fahrzeug und/oder stationärer Einheit angeordnet ist, empfangen werden. Hier können die entsprechenden Sensordaten dann ausgewertet werden.

Ergänzend sei darauf hingewiesen, dass "aufweisend" keine anderen Elemente oder Schritte ausschließt und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### Bezugszeichenliste

- U: Umfangsrichtung
- A: Axialrichtung
- R: Radialrichtung

- 2: Fahrzeugreifen
- 4: Lauffläche
- 6: Seitenwand
- 8: Seitenwand
- 10: Reifeninnenseite
- 12: Schaumstoff
- 14: Membran
- 16: Elektronikmodul
- 20: Klebeschicht
- 24: Ausschnitt
- 26: Felge
- 28: Rad
- 30: Gürtelabschnitt
- 32: Ende
- 34: Ende
- 36: Reifeninnenraum
- 38: weitere Membran
- 40: weiteres Elektronikmodul

## Patentansprüche

1. Fahrzeugreifen (2) mit einer Lauffläche (4), Seitenwänden (6, 8) und einer Reifeninnenseite (10), wobei Schaumstoff (12) an der Reifeninnenseite (10) angeordnet ist, wobei eine zur Dämpfung von Schallwellen ausgebildete Membran (14) mit dem Schaumstoff (12) verbunden ist, wobei ein Elektronikmodul (16) an der Reifeninnenseite (10) angeordnet ist, und wobei die Membran (14) mit dem Elektronikmodul (16) gekoppelt ist, **dadurch gekennzeichnet, dass** zumindest eine Außenseite des Elektronikmoduls (16) direkt an der Reifeninnenseite (10) befestigt ist.

2. Fahrzeugreifen (2) nach dem vorhergehenden Anspruch, **dadurch gekennzeichnet, dass** die Membran (14) zumindest abschnittsweise an dem Schaumstoff (12) befestigt ist und/oder zumindest abschnittsweise in den Schaumstoff (12) eingebettet ist.

3. Fahrzeugreifen (2) nach einem der vorhergehenden Ansprüche, **dadurch gekennzeichnet, dass** das Elektronikmodul (16) direkt mit der Membran (14) gekoppelt ist.

4. Fahrzeugreifen (2) nach einem der vorhergehenden Ansprüche, **dadurch gekennzeichnet, dass** das Elektronikmodul (16) mittels der Membran (14) an dem Schaumstoff (12) befestigt ist.

5. Fahrzeugreifen (2) nach einem der vorhergehenden Ansprüche, **dadurch gekennzeichnet, dass** das Elektronikmodul (16) indirekt mittels mindestens einem Verbindungsmittel mit der Membran (14) gekoppelt ist.

6. Fahrzeugreifen (2) nach einem der vorhergehenden Ansprüche, **dadurch gekennzeichnet, dass** die Membran (14) zum Empfang und/oder Aussenden einer elektromagnetischen Welle ausgebildet ist.

7. Fahrzeugreifen (2) nach einem der vorhergehenden Ansprüche, **dadurch gekennzeichnet, dass** die Membran (14) elektrisch leitfähig ausgebildet ist.

8. Fahrzeugreifen (2) nach einem der vorhergehenden Ansprüche, **dadurch gekennzeichnet, dass** die Membran (14) zum Übertragen von elektrischer Energie, insbesondere zum Leiten eines elektrischen Stroms, ausgebildet ist.

9. Fahrzeugreifen (2) nach einem der vorhergehenden Ansprüche, **dadurch gekennzeichnet, dass** die Membran (14) als elektrische Energiequelle ausgebildet ist.

10. Fahrzeugreifen (2) nach einem der vorhergehenden Ansprüche, **dadurch gekennzeichnet, dass** mindestens ein weiteres derartiges Elektronikmodul (40) direkt oder indirekt an der Reifeninnenseite (10) angeordnet ist.

11. Fahrzeugreifen (2) nach Anspruch 10, **dadurch gekennzeichnet, dass** die Elektronikmodule (16, 40) mit der Membran (14) gekoppelt sind.

12. Fahrzeugreifen (2) nach Anspruch 10 oder 11, **dadurch gekennzeichnet, dass** die Membran (14) eine elektrische Verbindung zwischen den Elektronikmodulen (16, 40) bildet.

13. Fahrzeugreifen (2) nach einem der Ansprüche 10 bis 12, **dadurch gekennzeichnet, dass** mindestens eine weitere derartige Membran (38) mit dem Schaumstoff (12) verbunden ist, wobei jedes Elektronikmodul (16, 40) mit mindestens einer der Membranen (14, 38) gekoppelt ist.

## Claims

1. Vehicle tyre (2) comprising a tread (4), sidewalls (6, 8) and a tyre inner side (10), with foam (12) being arranged on the tyre inner side (10), a membrane (14) that is designed for damping soundwaves being connected to the foam (12), an electronics module (16) being arranged on the tyre inner side (10), and the membrane (14) being coupled to the electronics module (16), **characterized in that** at least one outer side of the electronics module (16) is fastened directly on the tyre inner side (10).

2. Vehicle tyre (2) according to the preceding claim, **characterized in that** the membrane (14) is at least partly fastened on the foam (12) and/or is at least partly embedded in the foam (12).

3. Vehicle tyre (2) according to either of the preceding claims, **characterized in that** the electronics module (16) is coupled directly to the membrane (14).

4. Vehicle tyre (2) according to one of the preceding claims, **characterized in that** the electronics module (16) is fastened on the foam (12) by means of the membrane (14) .

5. Vehicle tyre (2) according to one of the preceding claims, **characterized in that** the electronics module (16) is coupled indirectly to the membrane (14) by means of at least one connecting means.

6. Vehicle tyre (2) according to one of the preceding claims, **characterized in that** the membrane (14) is designed for receiving and/or emitting an electromagnetic wave.

7. Vehicle tyre (2) according to one of the preceding claims, **characterized in that** the membrane (14) is of an electrically conductive form.

8. Vehicle tyre (2) according to one of the preceding claims, **characterized in that** the membrane (14) is designed for transmitting electrical energy, in particular for conducting an electric current.

9. Vehicle tyre (2) according to one of the preceding claims, **characterized in that** the membrane (14) is designed as an electrical energy source.

10. Vehicle tyre (2) according to one of the preceding claims, **characterized in that** at least one further such electronics module (40) is arranged directly or indirectly on the tyre inner side (10).

11. Vehicle tyre (2) according to Claim 10, **characterized in that** the electronics modules (16, 40) are coupled to the membrane (14).

12. Vehicle tyre (2) according to Claim 10 or 11, **characterized in that** the membrane (14) forms an electrical connection between the electronics modules (16, 40).

13. Vehicle tyre (2) according to one of Claims 10 to 12, **characterized in that** at least one further such membrane (38) is connected to the foam (12), each electronics module (16, 40) being coupled to at least one of the membranes (14, 38).

## Revendications

1. Pneumatique de véhicule (2) comprenant une bande de roulement (4), des flancs latéraux (6, 8) et une face intérieure de pneumatique (10), une mousse synthétique (12) étant disposée sur la face intérieure de pneumatique (10), une membrane (14) réalisée pour amortir des ondes acoustiques étant reliée à la mousse synthétique (12), un module électronique (16) étant disposé sur la face intérieure de pneumatique (10), et la membrane (14) étant couplée au module électronique (16), **caractérisé en ce qu'**au moins une face extérieure du module électronique (16) est fixée directement à la face intérieure de pneumatique (10).

2. Pneumatique de véhicule (2) selon la revendication précédente, **caractérisé en ce que** la membrane (14) est fixée à la mousse synthétique (12) au moins par endroits, et/ou est incorporée dans la mousse synthétique (12) au moins par endroits.

3. Pneumatique de véhicule (2) selon l'une quelconque des revendications précédentes, **caractérisé en ce que** le module électronique (16) est couplé directement à la membrane (14).

4. Pneumatique de véhicule (2) selon l'une quelconque des revendications précédentes, **caractérisé en ce que** le module électronique (16) est fixé à la mousse synthétique (12) au moyen de la membrane (14).

5. Pneumatique de véhicule (2) selon l'une quelconque des revendications précédentes, **caractérisé en ce que** le module électronique (16) est couplé indirectement à la membrane (14) au moyen d'au moins un moyen de connexion.

6. Pneumatique de véhicule (2) selon l'une quelconque des revendications précédentes, **caractérisé en ce que** la membrane (14) est réalisée pour recevoir et/ou émettre une onde électromagnétique.

7. Pneumatique de véhicule (2) selon l'une quelconque des revendications précédentes, **caractérisé en ce que** la membrane (14) est réalisée de manière électriquement conductrice.

8. Pneumatique de véhicule (2) selon l'une quelconque des revendications précédentes, **caractérisé en ce que** la membrane (14) est réalisée pour transmettre de l'énergie électrique, en particulier pour conduire un courant électrique.

9. Pneumatique de véhicule (2) selon l'une quelconque des revendications précédentes, **caractérisé en ce que** la membrane (14) est réalisée sous la forme d'une source d'énergie électrique.

10. Pneumatique de véhicule (2) selon l'une quelconque des revendications précédentes, **caractérisé en ce qu'**au moins un autre module électrique (40) de ce type est disposé directement ou indirectement sur la face intérieure de pneumatique (10).

11. Pneumatique de véhicule (2) selon la revendication 10, **caractérisé en ce que** les modules électroniques (16, 40) sont couplés à la membrane (14).

12. Pneumatique de véhicule (2) selon la revendication 10 ou 11, **caractérisé en ce que** la membrane (14) constitue une connexion électrique entre les modules électroniques (16, 40).

13. Pneumatique de véhicule (2) selon l'une quelconque des revendications 10 à 12, **caractérisé en ce qu'**au moins une autre membrane de ce type (38) est reliée à la mousse synthétique (12), chaque module électronique (16, 40) étant couplé à au moins l'une des membranes (14, 38).
